Europäisches Patentamt

European Patent Office

Office européen des brevets

(19)

(11) Veröffentlichungsnummer: **0 462 423 A1**

## (12) EUROPÄISCHE PATENTANMELDUNG

(21) Anmeldenummer: 91108532.2

(22) Anmeldetag: 25.05.91

(51) Int. Cl.5: **B62D 61/12**

(30) Priorität: 18.06.90 DE 9006814 U
12.12.90 DE 4039660

(43) Veröffentlichungstag der Anmeldung:
27.12.91 Patentblatt 91/52

(84) Benannte Vertragsstaaten:
AT BE CH DE DK ES FR GB GR IT LI LU NL SE

(71) Anmelder: Wilms, Peter
W-4355 Waltrop(DE)

(72) Erfinder: Wilms, Peter
W-4355 Waltrop(DE)

(74) Vertreter: Patentanwälte Meinke und
Dabringhaus Dipl.-Ing. J. Meinke Dipl.-Ing. W.
Dabringhaus
Westenhellweg 67
W-4600 Dortmund 1(DE)

(54) Vorrichtung zum Anheben oder Absenken wenigstens einer Achse eines Nutzfahrzeuges mit einer Druckluftanlage.

(57) Mit einer Vorrichtung (1) zum Anheben oder Absenken wenigstens einer Achse (4-6) eines Nutzfahrzeuges mit einer Druckluftanlage, insbesondere für Achsen von mehrachsigen Lkw's, von Anhängern und/oder von Sattelaufliegern, wobei am Fahrzeugrahmen (3) wenigstens ein Pneumatikzylinder (2) mit wenigstens einem Seilzug (7,8) zum Anheben oder Absenken der Fahrzeugachse oder -achsen (4-6) vorgesehen ist, soll eine Lösung geschaffen werden, mit der es insbesondere möglich ist, mit sehr geringem technischen Aufwand mehrere hintereinander liegende Achsen (4-6) gleichzeitig anzuheben.

Dies wird dadurch erreicht, daß der Seilzug (7,8) nach dem Flaschenzugprinzip mit wenigstens einer ortsfesten Umlenkrolle (10-13) am Fahrzeugrahmen (3) und einer zugeordneten losen Rolle (15,16) an der anzuhebenden bzw. abzusenkenden Fahrzeugachse (4,5,6) vorgesehen ist.

Fig. 1

EP 0 462 423 A1

Die Erfindung richtet sich auf eine Vorrichtung zum Anheben oder Absenken wenigstens einer Achse nach den kennzeichnenden Merkmalen des Anspruches 1.

Vorrichtungen zum Anheben oder Absenken von Fahrzeugachsen sind bekannt, so beispielsweise aus der DE-OS 27 13 053. Dort wird die Achse eines Sattelschlepperaufliegers hydraulisch gegen ein pneumatisches Federungssystem unmittelbar über ein Seil mittels einer Pneumatikzylinder-/-kolbeneinheit angehoben. Problematisch ist bei der bekannten Lösung, daß die Achse in ihrer Gesamtbelastung unmittelbar von den Pneumatikzylindern angehoben werden muß, so daß eine derartige Anlage ausgesprochen großvolumig ausgestaltet werden muß, um die notwendigen Kräfte aufbringen zu können.

Eine ähnliche, über eine Hubkette bewirkte Achsanhebung zeigt die DE-PS 912 533. Die unmittelbare Anhebung über die Drehung eines Drehschemels zeigt eine Lösung nach der DE-PS 921 250, mit der insbesondere erreicht werden soll, daß Kraftfahrzeuganhänger mit zwei oder mehreren Achsen leichter rückwärts gefahren werden können.

Eine über eine Zahnstange od. dgl. erfolgende Achsanhebung zeigt die britische Patentanmeldung GB-2 190 335, deren Einsatzgebiet in der Praxis durch die Art der Betätigung stark beschränkt ist.

Aufgabe der Erfindung ist die Schaffung einer Lösung, mit der es insbesondere möglich ist, durch vergleichsweise einfache Pneumatikzylinder-/-kolbeneinheiten Achsen problemlos anheben zu können, wobei es insbesondere auch möglich sein soll, mehrere hintereinander liegende Achsen gleichzeitig über die entsprechende Einheit anzuheben.

Mit einer Einrichtung der eingangs bezeichneten Art wird dies gemäß der Erfindung dadurch gelöst, daß der Seilzug nach dem Flaschenzugprinzip mit wenigstens einer ortsfesten Umlenkrolle am Fahrzeugrahmen und einer zugeordneten losen Rolle an der anzuhebenden bzw. abzusenkenden Fahrzeugachse vorgesehen ist.

Damit wird eine einfache, konstruktive Lösung des Anhebens und Absenkens von Fahrzeugachsen erreicht, wobei vergleichsweise kleine Kräfte von den Pneumatikzylinder-/-kolbeneinheiten aufgebracht werden müssen, allenfalls müssen größere Verstellwege mit eingeplant werden, was aber bei dem bevorzugten Einsatzgebiet der Erfindung bei Lastkraftwagen problemlos möglich ist.

Sind am Fahrzeug erfindungsgemäß wenigstens drei ortsfeste Umlenkrollen am Fahrzeugrahmen und je eine lose Rolle an jeder zu bewegenden Fahrzeugachse vorgesehen, so ist diese Vorrichtung mit Hilfe der so geschaffenen, parallelen Flaschenzuganordnung sehr gut zur Durchführung des Hebe- und Senkvorganges zweier Fahrzeugachsen geeignet.

In weiterer Ausgestaltung ist nach der Erfindung vorgesehen, daß der Pneumatikzylinder mit der fahrzeugeigenen Druckluftanlage verbunden ist, wodurch die Kosten für ein gesondertes Druckluftsystem eingespart werden können.

Falls zwei Pneumatikzylinder zum Anheben oder Absenken einer oder mehrerer Fahrzeugachsen am Fahrzeugrahmen vorgesehen sind, kann diese Erfindung problemlos für die Anhebung oder Absenkung sehr schwerer Achsen mit unter Umständen mehr als zwei Rädern, wie z.B. bei Schwerlasttransporten eingesetzt werden.

Vorteilhaft ist es weiter, wenn zur wahlweisen Anhebung oder Absenkung jeweils einer oder mehrerer Fahrzeugachsen am Seilzug eine Festsetzeinrichtung vorgesehen ist, die ganz nach Wunsch die parallelen, jeweils mit einer Fahrzeugachse über eine Rolle verbundenen Flaschenzüge mit dem Pneumatikzylinder verbindet oder trennt.

Da eine Festsetzeinrichtung, was im obigen Fall erwünscht, im anderen Fall aber unerwünscht sein kann, in der Lage ist, mehrere Flaschenzüge gleichzeitig zu blockieren, ermöglicht eine weitere Ausgestaltung der Erfindung, das getrennte, bezogen auf die Fahrzeugachse, wahlweise durchgeführte Anheben oder Absenken zweier oder mehrerer Fahrzeugachsen, indem zwei sich gegenüberliegende Pneumatikzylinder am Fahrzeugrahmen mit je einem Seilzug, einer ortsfesten Umlenkrolle und einer losen Rolle an der zu bewegenden Fahrzeugachse und einer sie verbindenden Festsetzeinrichtung angeordnet sind.

Eine weitere Gestaltungsmöglichkeit gemäß der Erfindung ist auch zum Anheben oder Absenken einer gegebenen Anzahl von Fahrzeugachsen denkbar, wenn die gleiche Anzahl von Seilzügen mit jeweils einer ortsfesten Umlenkrolle, einer losen Rolle an der zu bewegenden Fahrzeugachse und einer Festsetzeinrichtung mit nur einem Pneumatikzylinder verbunden ist.

Die Erfindung ist nachstehend anhand der Zeichnung beispielsweise näher erläutert. Diese zeigt in:

Fig. 1     einen Teilschnitt durch einen Sattelauflieger in vereinfachter Darstellung,

Fig. 2     einen Teilschnitt durch ein abgewandeltes Ausführungsbeispiel sowie in

Fig. 3     ein weiteres abgewandeltes Ausführungsbeispiel.

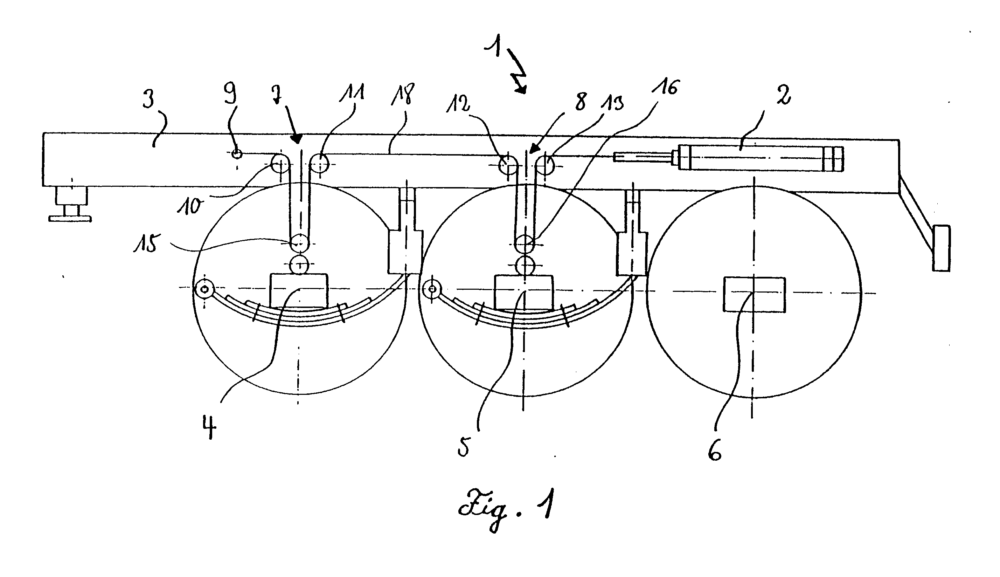

In Fig. 1 ist die im allgemeinen mit 1 bezeichnete Vorrichtung mit einem Pneumatikzylinder 2 zum Anheben oder Absenken wenigstens einer Fahrzeugachse eines Nutzfahrzeuges mit einer Druckluftanlage an einem Fahrzeugrahmen 3 und mehreren Radachsen 4, 5 und 6 vereinfacht dargestellt.

Unterhalb des Fahrzeugrahmens 3 ist der Pneumatikzylinder 2 angebracht. Dieser Pneumatikzylinder ist über die Seilzüge 7 und 8 mit den Radachsen 4 und 5 verbunden. Die Seilzüge 7, 8, die gemäß dem Flaschenzugprinzip konzipiert sind, bestehen aus jeweils zwei ortsfesten Umlenkrollen 10, 11, 12, 13, und jeweils einer losen Rolle 15, 16, die an den zu bewegenden Fahrzeugachsen 4, 5, vorgesehen ist. Während das eine Ende, des sowohl im Seilzug 8 wie auch im Seilzug 7 geführten Seiles 18 mit dem Pneumatikzylinder fest verbunden ist, ist das andere Ende des Seiles 18 mit einer Festsetzeinrichtung 9 fest verbunden.

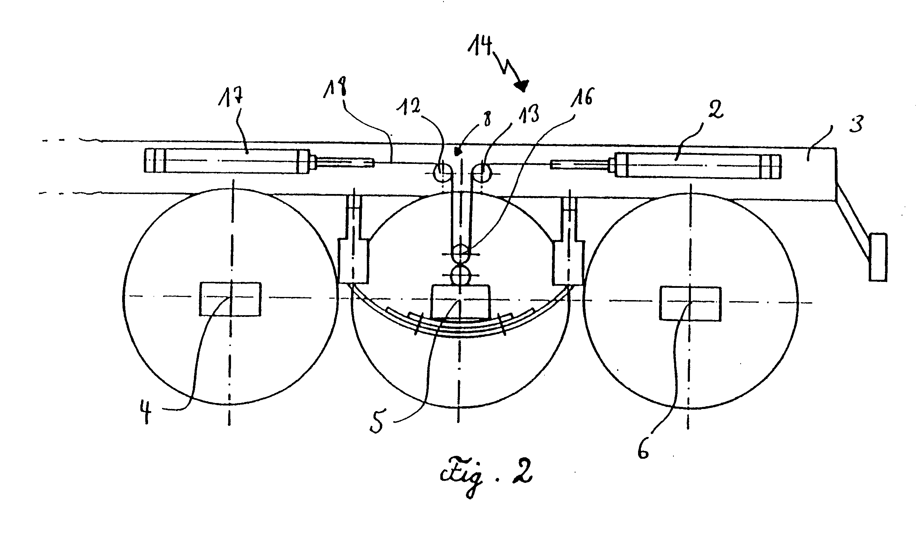

Fig. 2 zeigt einen Sattelauflieger 14, der sich von Fig. 1 dahingehend unterscheidet, daß am Fahrzeugrahmen 3 zwei Pneumatikzylinder 2 und 17 angebracht sind, die beide mit dem Seilzug 8 in Verbindung stehen. Dazu wird das Seil 18, das an seinem einen Ende mit dem Pneumatikzylinder 2 fest verbunden ist, zuerst über die Umlenkrolle 13 geführt, läuft dann um die lose Umlenkrolle 16, die an der Fahrachse 5 angebracht ist und wird von dort zurück zum Fahrzeugrahmen 3 über die Umlenkrolle 12 zum Pneumatikzylinder 17 geführt und mit diesem fest verbunden.

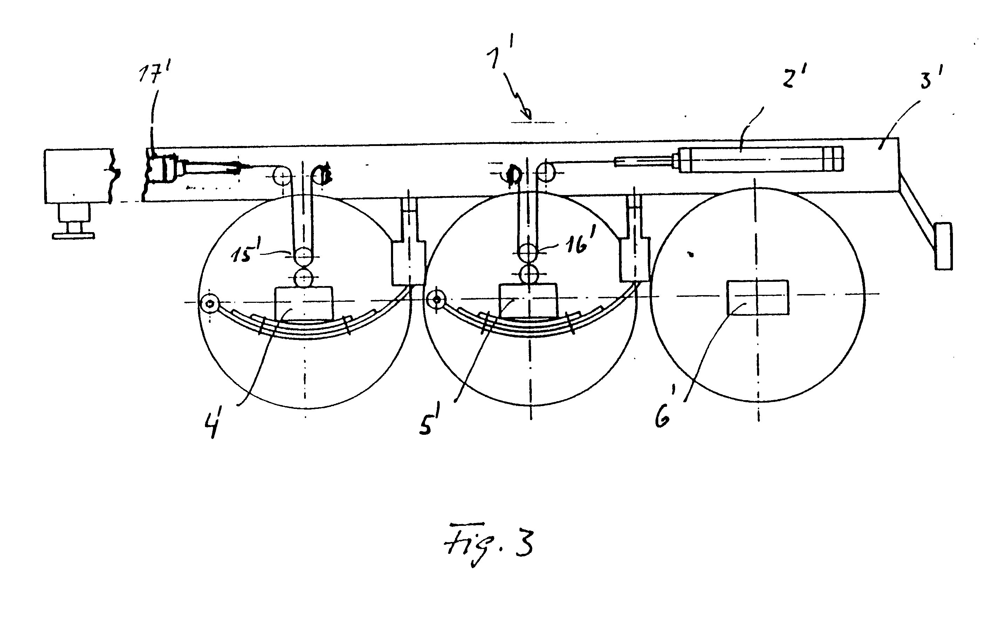

In Fig. 3 ist ein weiteres abgewandeltes Ausführungsbeispiel dargestellt, wobei die relevanten Bezugszeichen mit einem "1" versehen sind. Hier ist die Radachse 4' der Pneumatikzylinder 17' zugeordnet und die Achse 5' der Pneumatikzylinder 2', derart, daß ein individuelles Anheben und Absenken dieser beiden Achsen unabhängig voneinander möglich ist.

Das Anheben oder Absenken der Fahrzeugachsen 4,5 erfolgt in Fig. 1 und in Fig. 2 nach dem Flaschenzugprinzip. Eine Erniedrigung des Luftdrucks im Pneumatikzylinder 2,17 führt zu einer Bewegung des Kolbens in Richtung des Zylinderinneren, so daß am Seil 18 eine Zugkraft entsteht, die über die Seilzüge 7 und 8 in Fig. 1 bzw. 8 in Fig. 2 auf die Fahrachsen 4 und 5 bzw. 5 übertragen wird und so zur Anhebung der Fahrzeugachsen 4,5 führt. Das Absenken der Fahrzeugachse 4,5 erfolgt bei Druckminderung im Pneumatikzylinder 2,17 in umgekehrter Weise. Die Anordnung der Pneumatikzylinder 2,17 gemäß Fig. 2 kann bei sehr schweren Fahrzeugachsen vorteilhaft sein, wenn ein sehr großer Kraftaufwand zu ihrer Anhebung notwendig ist.

Natürlich ist das beschriebene Ausführungsbeispiel der Erfindung noch in vielfacher Hinsicht abzuändern, ohne den Grundgedanken zu verlassen. So ist die Erfindung insbesondere nicht auf die Kombination einer bestimmten Anzahl von Pneumatikzylindern und Seilzügen beschränkt. Es kann insbesondere auch jede Fahrzeugachse mit einem Pneumatikzylinder zur individuellen Steuerung des Anhebens und Absenkens der Fahrzeugachsen ausgestattet werden. Es ist nach der Erfindung selbstverständlich auch möglich, daß sich die Seilzüge an einer Fahrzeugachse aus zusätzlichen festen und losen Rollen zusammensetzt, um den Kraftaufwand zur Hebung der Fahrzeugachse noch weiter zu verringern.

**Patentansprüche**

1. Vorrichtung zum Anheben oder Absenken wenigstens einer Achse eines Nutzfahrzeuges mit einer Druckluftanlage, insbesondere für Achsen von mehrachsigen Lkw's, von Anhängern und/oder von Sattelaufliegern, wobei am Fahrzeugrahmen wenigstens ein Pneumatikzylinder mit wenigstens einem Seilzug zum Anheben oder Absenken der Fahrzeugachse oder -achsen vorgesehen ist,
   dadurch gekennzeichnet,
   daß der Seilzug (7,8) nach dem Flaschenzugprinzip mit wenigstens einer ortsfesten Umlenkrolle (10-13) am Fahrzeugrahmen (3) und einer zugeordneten losen Rolle (15,16) an der anzuhebenden bzw. abzusenkenden Fahrzeugachse (4,5,6) vorgesehen ist.

2. Vorrichtung nach Anspruch 1,
   dadurch gekennzeichnet,
   daß zum gleichzeitigen Anheben oder Absenken zweier Fahrzeugachsen (4,5,6) mittels Seilzug (7,8) wenigstens drei ortsfeste Umlenkrollen (10,11,12,13) am Fahrzeugrahmen (3) und je eine lose Rolle (15,16) an jeder zu begrenzenden Fahrzeugachse (4,5,6) vorgesehen sind.

3. Vorrichtung nach einem der Ansprüche 1 oder 2,
   dadurch gekennzeichnet,
   daß der Pneumatikzylinder (2,17) mit der fahrzeugeigenen Druckluftanlage verbunden ist.

4. Vorrichtung nach einem der vorangehenden Ansprüche,
   dadurch gekennzeichnet,
   daß zwei Pneumatikzylinder (2,17) zum Anheben oder Absenken einer oder mehrerer Fahrzeugachsen (4,5,6) am Fahrzeugrahmen (3) vorgesehen sind.

5. Vorrichtung nach einem der vorangehenden Ansprüche,
   dadurch gekennzeichnet,
   daß zur wahlweisen Anhebung oder Absenkung jeweils einer oder mehrerer Fahrzeugachsen (4,5,6) am Seilzug (7,8) eine Festsetzeinrichtung vorgesehen ist.

6. Vorrichtung nach einem der vorangehenden Ansprüche,
dadurch gekennzeichnet,
daß zum getrennten, bezogen auf die Fahrzeugachse (4,5,6), wahlweise durchgeführten Anheben oder Absenken zweier oder mehrerer Fahrzeugachsen (4,5,6) zwei sich gegenüberliegende Pneumatikzylinder (2,17) am Fahrzeugrahmen (3) mit je einem Seilzug (7,8), einer ortsfesten Umlenkrolle (10,11, 12,13) und einer losen Rolle (15,16) an der zu bewegenden Fahrzeugachse (4,5,6) und einer sie verbindenden Festsetzeinrichtung (9) angeordnet sind.

7. Vorrichtung nach einem der vorangehenden Ansprüche,
dadurch gekennzeichnet,
daß zum gleichzeitigen Anheben oder Absenken einer gegebenen Anzahl von Fahrzeugachsen (4,5,6) die gleiche Anzahl von Seilzügen (7,8) mit jeweils einer ortsfesten Umlenkrolle (10,11,12,13), einer losen Rolle (15,16) an der zu bewegenden Fahrzeugachse (4,5,6,7) und einer Festsetzeinrichtung (9) mit nur einem Pneumatikzylinder (2,17) verbunden ist.

Fig. 1

EP 0 462 423 A1

Fig. 2

EP 0 462 423 A1

Fig. 3

Europäisches
Patentamt

**EUROPÄISCHER RECHERCHENBERICHT**

Nummer der Anmeldung

EP 91108532.2

| | EINSCHLÄGIGE DOKUMENTE | | | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl.⁵) | |
| X | DE - C - 870 365 (FREUDENBERGER) * Fig. 1,2; Ansprüche 3,4 .* -- | 1,2,3 | B 62 D 61/12 | |
| A | US - A - 2 698 758 (RONNING) * Fig. 2,3 * -- | 1 | | |
| D,A | DE - A1 - 3 713 053 (NAVARRO) * Fig. * -- | 1 | | |
| D,A | DE - C - 912 533 (SCHMITZ) * Fig. * -- | 1 | | |
| D,A | DE - C - 921 250 (SCHMAGER) * Fig. 1,2 * -- | 1 | | |
| D,A | GB - A - 2 190 335 (BROADBENT) * Fig. 1,2 * ---- | 1 | RECHERCHIERTE SACHGEBIETE (Int Cl⁵) B 60 G B 62 D | |

Der vorliegende Recherchenbericht wurde für alle Patentansprüche erstellt.

| Recherchenort | Abschlußdatum der Recherche | Prüfer |
|---|---|---|
| WIEN | 30-07-1991 | PANGRATZ |